# EUROPEAN PATENT APPLICATION

(11) **EP 1 635 510 A2**
(43) Date of publication of application: **15.03.2006**
(21) Application number: 05018943.0
(22) Date of filing: 31.08.2005
(51) Int. Cl.: H04L 12/28

(54) **Method for on-line recovery of parameter synchronization for ciphering applications**

(30) Priority: 09.09.2004 US 522270 P
(71) Applicant: ASUSTeK Computer Inc., Peitou, Taipei City (TW)
(72) Inventor: Jiang, Sam Shiaw-Shiang, Peitou, Taipei City (TW)
(74) Representative: Schmitz, Hans-Werner

(57) **Abstract**

According to the method for restoring hyper frame number (HFN) synchronization in a wireless communications system, a receiving station (90) can recover HFN synchronization on line. Following data transmission, data receipt and commencement of a ciphering session, HFN un-synchronization between the transmitting and receiving stations of the wireless communications system is detected by identification of HFN un-synchronization symptoms during said ciphering session. The current HFN of the receiving station (90) is adjusted and the new HFN value adopted for subsequent operations within the ciphering session. Data loss due to PDUs being deciphered using un-synchronous parameters is minimized and explicit parameter signaling procedures, such as RLC Reset procedures, are avoided.

## Description

The present invention relates to methods for ensuring and restoring hyper frame number according to the pre-characterizing clauses of claims 1 and 2.

The surge in public demand for wireless communication devices has placed pressure upon industry to develop increasingly sophisticated communications standards. The 3^{rd} Generation Partnership Project (3GPP™) is an example of such a new communications protocol. The 3^{rd} Generation Partnership Project (3GPP) specifications 3GPP TS 33.102 V6.1.0 (2004-06) "Security Architecture" (referred to hereinafter as 3GPP TS 33.102) is included herein by reference. This document provides a technical description of a Universal Mobile Telecommunications System (UMTS), and related security protocols thereof. Additionally, 3GPP TS 25.322 V6.1.0 (2004-06) Radio Link Control (RLC) protocol specification (referred to hereinafter as 3GPP TS 25.332) is also included herein by reference. This document details the RLC functionalities used in UMTS. The 3GPP standards utilize a three-layer approach to communications.

In 3GPP communications, hyper frame numbers (HFNs) are associated with protocol data units (PDUs) for ciphering operations. It is important that a transmitter and a receiver have synchronized HFNs to properly communicate data.

The stat-of-the-art detection of HFN un-synchronization is not without drawbacks. In some cases, it is assumed that erroneous length indication is due to a HFN un-synchronization and an thus a reset procedure is triggered to restore HFN synchronization. In other cases, when HFN un-synchronization is detected, the receiver invokes a process to synchronize the communication link. This can be done with an explicit parameter signaling procedure. Examples of explicit signaling procedures for both acknowledged mode (AM) and unacknowledged mode (UM) transmission include an RLC re-establishment procedure and a security parameter synchronization procedure. For AM transmission, the RLC reset procedure is another example of an explicit parameter signaling procedure.

Explicit parameter signaling procedures involve explicit signaling between the sender and the receiver, adding a further transmission overhead and is therefore time consuming. Thus, conventional HFN re-synchronization procedures are time consuming due to transmission delay, potential signal loss during radio transmission, and utilization of a time-out retransmission mechanism.

This in mind, the present invention aims at providing methods to maintain HFN re-synchronization between stations that avoid the need for time consuming procedures and/or system resets and subsequent data loss.

This is achieved by methods according to claims 1 and 2. The dependent claims pertain to corresponding further developments and improvements.

As will be seen more clearly from the detailed description following below, the claimed method for ensuring hyper frame number includes discarding a received protocol data unit if the received protocol data unit has an sequence number that is out of sequence according to a preceding PDU and a following PDU. The claimed method for restoring hyper frame number includes adjusting a current HFN of a receiving station to derive an adjusted HFN, and adopting the adjusted HFN at the receiving station for subsequent operations of the ciphering session.

In the following, the invention is further illustrated by way of example, taking reference to the accompanying drawings. Thereof
- Fig.1: is a block diagram of the three layers structure of a communications system according to the 3^{rd} Generation Partnership Project (3GPP™) communications protocol,
- Fig.2: is a simplified diagram of a conventional transmission/reception process from a layer-2 perspective,
- Fig.3: is a detailed block diagram of a prior art layer-2 interface,
- Fig.4: is a schematic diagram showing a typical arrangement of transmission time intervals according to the prior art,
- Fig.5: is a block diagram showing an example of an unacknowledged mode data protocol data unit (UMD PDU) according to the prior art,
- Fig.6: shows an example of SN corruption in one PDU, which will cause hyper frame number (HFN) un-synchronization according to the prior art,
- Fig.7: is a representation of avoiding HFN un-synchronization induced by SN corruption in one PDU according to an embodiment of the present invention,
- Fig.8: is a flow diagram showing a preferred embodiment method of the present invention,
- Fig. 9: is a flow diagram showing another preferred embodiment method of the present invention,
- Fig.10: is a representation of received PDU deciphering according to the present invention, with HFN adjustment triggered by illegal length indicator (LI) states, and
- Fig. 11: is a representation of received PDU deciphering according to the present invention, with HFN adjustment triggered by illegal LI states.

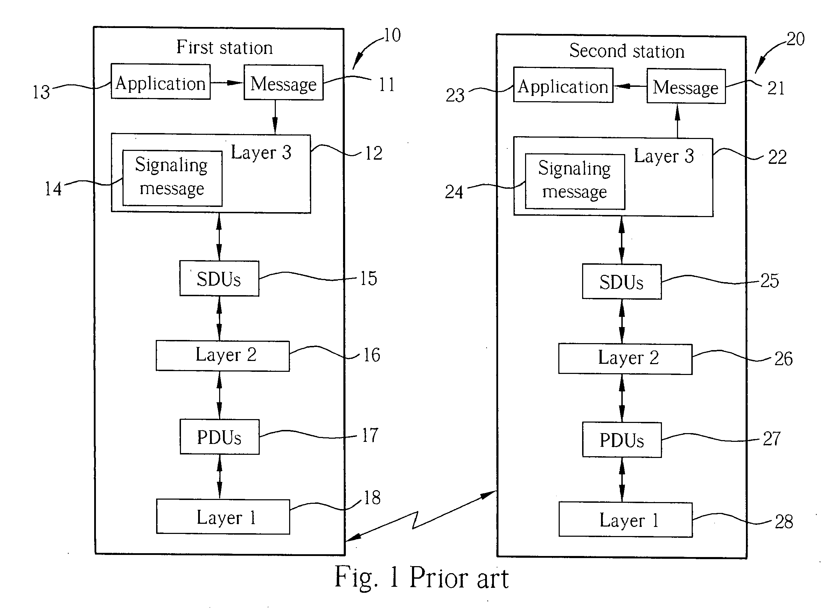

Please refer to Fig.1. Fig.1 is a block diagram of the three layers in such a communications protocol. In a typical wireless environment, a first station 10 is in wireless communications with one or more second stations 20. An application 13 on the first station 10 composes a message 11 and has it delivered to the second station 20 by handing the message 11 to a layer-3 interface 12. The layer-3 interface 12 may also generate some layer-3 signaling messages 14 for the purpose of controlling layer-3 operations. The layer-3 interface 12 delivers either the message 11 or the layer-3 signaling message 14 to a layer-2 interface 16 in the form of layer-2 service data units (SDUs) 15. The layer-2 SDUs 15 may be of any length. The layer-2 interface 16 composes the SDUs 15 into one or more layer-2 protocol data unit(s) (PDU) 17. Each layer-2 PDU 17 is of a fixed length, and is delivered to a layer-1 interface 18. Note that the fact that variable length SDUs are transported in fixed length PDUs generates issues that are highly relevant to the present invention, and these issues are discussed in more detail below. The layer-1 interface 18 is the physical layer, transmitting data to the second station 20. The transmitted data is received by the layer-1 interface 28 of the second station 20 and reconstructed into one or more PDUs 27, which is/are passed up to the layer-2 interface 26. The layer-2 interface 26 receives the PDU (s) 27 and builds up one or more layer-2 SDU (s) 25 from the PDU(s) 27. The layer-2 SDU(s) 25 is/are passed up to the layer-3 interface 22. The layer-3 interface 22, in turn, converts the layer-2 SDU(s) 25 back into either a message 21, which should be identical to the original message 11 that was generated by the application 13 on the first station 10, or a layer-3 signaling message 24, which should be identical to the original signaling message 14 generated by the layer-3 interface 12, and which is then processed by the layer-3 interface 22. The received message 21 is passed up to an application 23 on the second station 20. (As a note regarding terminology used throughout this disclosure, a PDU is a data unit that is used internally by a layer to transmit to or receive from its lower layer, whereas an SDU is a data unit that is passed up to, or received from, its upper layer.)

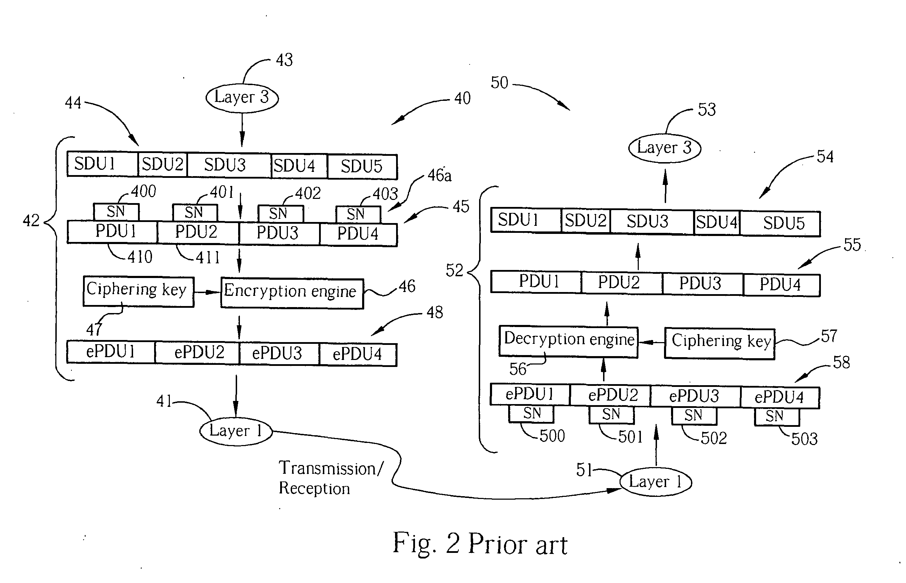

Please refer to Fig.2. Fig.2 is a simplified diagram of a transmission/reception process from a layer-2 perspective. A layer-2 interface 42 of a first station 40 receives an SDU string 44 (i.e. a string of SDUs) from a layer-3 interface 43. The SDUs 44 are sequentially ordered SDU1~SDU5, and are of unequal length. The layer-2 interface 42 converts the layer-2 SDU string 44 into a layer-2 PDU string 45. The PDUs 45 are sequentially ordered PDU1~PDU4, and are all of equal length. Each PDU of the layer-2 PDU string 45 is associated with a header that includes a sequence number (.SN) to explicitly identify the PDUs and indicate their respective sequential positions within the PDU string 45. This better enables a second station 50 to properly determine the sequential ordering of a received PDU string 58 (generated by subsequent processing and transmission of the PDU string 45 as described below), and thus reconstruct a correctly concatenated SDU string 54 corresponding to the original SDU string 44. These header-inclusive transmission modes include acknowledged mode (AM) transmissions, and unacknowledged mode (UM) transmissions. Both AM and UM type transmissions require the addition of a header by the transmitting station 40 to each PDU to hold the inclusive sequence number. (As the present invention relates to transmission modes requiring the addition of a header to each PDU, other possible transmission modes are omitted from this disclosure.) The bit size of an SN will vary depending on the transmission method used. For example, in UM transmissions the SN is a 7-bit value held in the header of each PDU, whereas in AM transmissions the SN is a 12-bit value held in the header of each PDU.

Each of the layer-2 PDUs in the PDU string 45, PDU1~PDU4, thus has an associated SN, numbered in Fig.2 as 400~403 respectively. These SNs are n-bit numbers assigned by the layer-2 interface 42 to the PDUs of the PDU string 45. The SN 400 associated with PDU1 holds a value that may be any n-bit number, i.e. the SN of a first PDU of a string is not necessarily zero, the SNs 401~403 of succeeding PDUs are successively incremented from the number held by SN 400. For example, if PDU1 410 has an SN 400 of 192, then PDU2 411 would have an associated SN 401 of 193, and so forth. Note that SN rollover (which occurs after a value of 2ⁿ - 1 as each SN is an n-bit number where n is the SN word length in bits) can cause sequentially later PDUs to have SNs that are numerically lower than those of sequentially earlier PDUs. For example, assuming an eight-bit word length for SNs in a system, an initial starting value of zero and increments of one, the SN bits would all be set to logical zero every 256 increments. SNs thus have a cyclical ambiguity. That is, after every 2ⁿ PDUs the SNs repeat, hence, the value assigned to the SN 46a would appear every 2ⁿ PDUs, and thus the PDUs 45 are not uniquely identified by the SNs, but only uniquely identified within each SN cycle. This may lead to confusion between the first station 40 and the second station 50 when a signaling message is passed between the two stations 40 and 50 with only an SN as an identifier, hence a hyper frame number (HFN) is also associated with each PDU in addition to an SN. This feature is discussed further in context with the present invention below.

Further relating to the example given in Fig.2, the layer-2 PDU string 45 is encrypted by an encryption engine 46. The encryption of PDUs includes many variables, but, in particular, the encryption engine 46 utilizes the SN 400~403 of each PDU (PDU1~PDU4), and a ciphering key 47. The ciphering key 47 is provided by the layer-3 interface 43, by way of command primitives. The result is an encrypted PDU (ePDU) string 48, which is then sent off to a layer-1 interface 41 for transmission. A reverse process occurs at the second station 50. The second station 50, in the same way as station 40, associates an SN with each received ePDU of the ePDU string 58, i.e. SNs 500~503 are associated with ePDU1~ePDU4 respectively. In AM and UM transmissions, this association is explicit, i.e. by extracting SNs from the header of each received ePDU, hence SNs 400~403 should be identical to SNs 500~503. The SNs 500~503, along with a ciphering key 57, are used by a decryption engine 56 to decrypt the ePDU string 58 into a decrypted PDU string 55. The decrypted PDU string 55 is converted into a layer-2 SDU string 54, which is then passed up to a layer-3 interface 53.

For the ePDU string 58 to be properly decrypted into the decrypted PDU string 55, the decryption engine 56 must use a ciphering key 57 that is identical to the ciphering key 47. A layer-3 signaling message, a so-called ciphering reconfiguration activation command, is used to synchronize the ciphering keys 47 and 57. Periodically, the first station 40 may wish to change its ciphering key 47 for the sake of security. The layer-3 interface 43 will thus compose a layer-3 ciphering reconfiguration activation command, which demands both the changing of the ciphering key 47 and relays a time at which the key change is to take effect. For the sake of simplicity, though, rather than using an actual time, the ciphering reconfiguration activation command indicates an activation time. This activation time is simply a layer-2 PDU SN value. PDUs with SNs that are sequentially before the activation time are encrypted using the old ciphering key. PDUs with SNs that are sequentially on or after the activation time are encrypted using a new ciphering key. By including the ciphering key and the activation time in the ciphering reconfiguration activation command, the first station 40 ensures that the ciphering process will be properly synchronized with the second station 50. After reception of the ciphering reconfiguration activation command, the second station 50 will use the old ciphering key to decrypt ePDUs having SNs that are sequentially prior to the activation time. The second station 50 will use the new ciphering key to decrypt encrypted PDUs having SNs that are sequentially on or after the activation time. As described above, for the ciphering mechanism of a UMTS to work, all the parameters in the transmitting station and the receiving station must match, i.e. must be kept in synchronization.

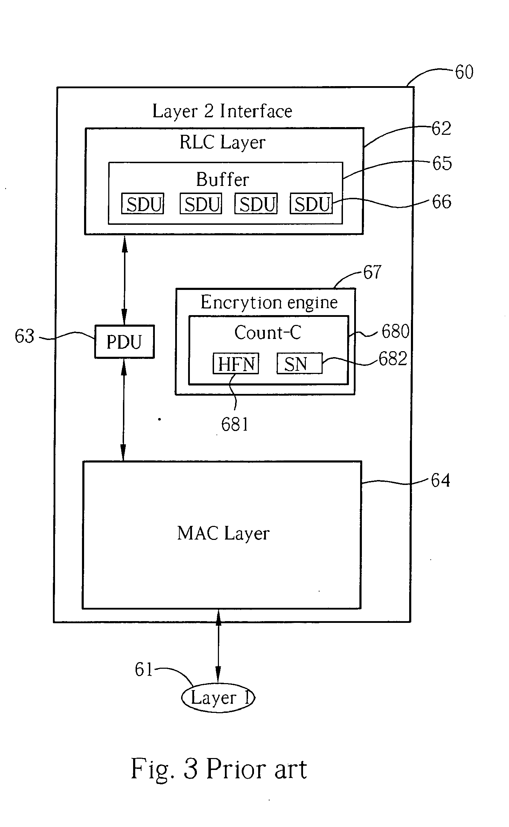

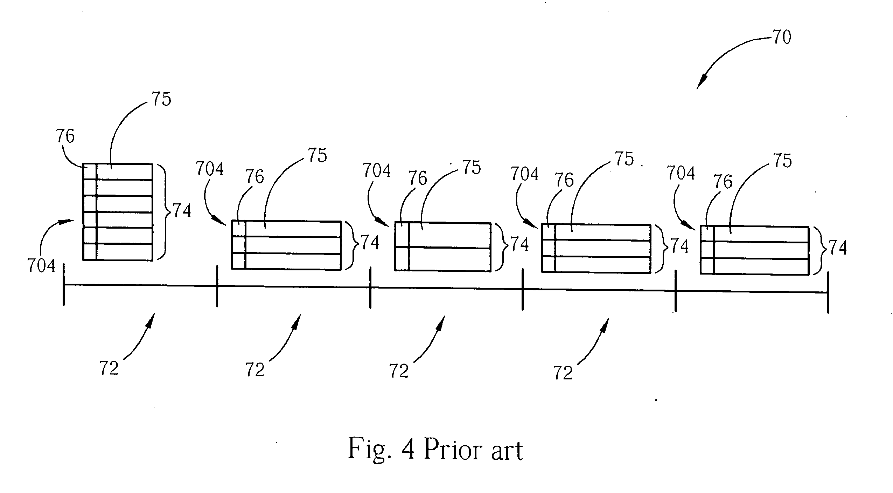

Please refer to Fig.3, which is a more detailed block diagram of a prior art layer-2 interface 60. The layer-2 interface 60 comprises a radio link control (RLC) layer 62 on top of, and in communication with, a medium access control (MAC) layer 64. The MAC layer 64 acts as an interface between the RLC layer 62 and the layer-1 interface 61. The MAC layer 64 divides the transmission of PDUs 63, which the MAC layer 64 receives from the RLC layer 62, into a series of transmission time intervals (TTIs) 72 (Fig.4 refers). Each TTI 72 has an interval length that is identical to the other TTIs 72, and within the time span of each TTI 72, the MAC layer 64 sends off a transport block set 74 to the layer-1 interface 61 to be transmitted. Each transport block set 74 comprises a predetermined number of transport blocks 704, and each transport block 704 comprises one RLC PDU 75 and may optionally carry a MAC header. All the RLC PDUs 75 (and thus the transport blocks 704) within each TTI 72, are of the same length, however, the number of RLC PDUs 75 (or equivalent transport blocks 704) in each transport block set 74 within the span of a TTI 72 may change.

Whereas an SN is embedded in each packet of information sent between the transmitting station and the receiving station, i.e. in each RLC PDU 63, only an initial HFN value is explicitly transmitted between stations before a ciphering session starts. Otherwise, only SNs are transmitted and HFNs are never transmitted, instead, each station maintains a record of current HFN separately according to the SN of each PDU for the remainder of the ciphering session. To realize this, the SN 76 associated with each PDU 63/75, is used to form a 'Count-C' value 680 for that PDU 63/75. The Count-C value 680 is a 32-bit number that comprises a HFN 681 as the most significant 32-n bits (as the SN 76 is an n-bit number), and comprises an SN 682 of the PDU 63/75 as the least significant n bits. The HFN 681 is initially set to zero, or a specific value specified by the radio access network, and is incremented upon detection of rollover in the PDU 63/75 SN 76. For example, if the HFN 681 has a value of zero, and a PDU 63/75 has an associated SN 76 of 255, Count-C 680 would have a value of 255 and that value is used to encrypt the PDU 63 to generate the encrypted PDU 75. A subsequent PDU 63/75 would have an SN 76 of zero, due to rollover, and the encryption engine 67 would thus increment the HFN value 681 to 1. The value of Count-C 680 used to encrypt this subsequent PDU 63, would therefore be 256.

Because each station must maintain its own independent HFN for the duration of a ciphering session, the only available synchronization reference being the receipt of the initial HFN value at the commencement of the session, there is a risk of HFNs of one station becoming un-synchronized with respect to those of another station(s). Since HFN is incremented by one when SN rolls over its maximum value represented by the bit length of the SN (as described above), there are two situations that will cause loss of HFN synchronization: when the receiver misses (due to transmission problems etc), more than SN space number of consecutive PDUs (for UM with 7-bit SN, SN space number = 128), or when some bits of the SN field embedded in a PDU are corrupted during radio transmission.

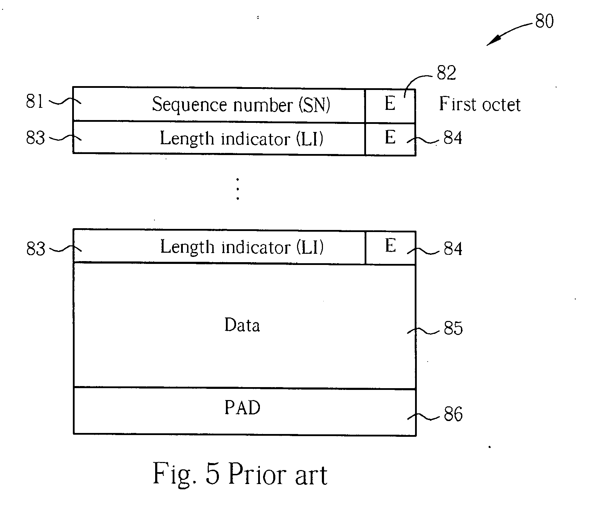

To assist the receiving station in correctly concatenating deciphered SDUs, the transmitting station's layer-2 inserts 'length indicators', i.e. bits carrying information on the ending position of an SDU data, into the beginning of the PDU which includes the last segment of the SDU data (assuming the original SDU was of sufficient length to warrant splitting into multiple PDUs). If, however, several SDUs are short enough to fit into one PDU, they can be concatenated and the appropriate length indicators are inserted into the beginning of the PDU. A length indicator (LI) can be 7-bits or 15-bits depending on the size of the PDU. If there is insufficient data to fill a whole PDU, a 'padding field' or piggybacked 'STATUS' message is appended. An example of an unacknowledged mode data PDU (UMD PDU) is shown in Fig.5. The header contains an SN 81, extension bit E 82 and optionally, an LI 83, which will also have an extension bit, E 84. The purpose of the extension bit E 82 after the SN field 81 is to signify whether the next consecutive octet of the UMD PDU 80 contains data, or an LI. Similarly, the purpose of the extension bit E 84 after the LI 83 is to signify whether the next consecutive octet of the UMD PDU 80 contains data, or another LI. As mentioned above, a number of LIs 83 may be required in cases where the contents of more than one SDU are contained within a single PDU 80, or where a padding field or piggybacked status message is included; these will follow on consecutively from the SN 81. Any unused octets after the end of the data 85 should, according to 3GPP TS 25.322, contain padding 86. Any unused space in a PDU should be located at the end of the PDU, and is referred to as a padding field. A predefined value of LI, called padding LI, is used to indicate the presence of a padding field. The padding field should be of sufficient length such that the length of the PDU as a whole conforms to the predefined total length for a PDU as dictated by the RLC layer. The padding may have any value and both the transmitting and receiving stations simply ignore padding content. Status messages, i.e. STATUS PDUs, can be piggybacked on an AMD PDU by using part or all of the padding space and a predefined value of LI is used to indicate the presence of a piggybacked STATUS PDU. This LI replaces the padding LI as the piggybacked STATUS PDU immediately follows the PDU data. When only part of the available space is used, remainder of the PDU after the end of the piggybacked STATUS PDU is regarded as padding.

When ciphering a UM transmission (where the SN is 7 bits long and the HFN 25 bits long) all the bytes of a PDU are ciphered except the first byte, which contains the SN of the PDU and an extension bit. For AM transmission (where the SN is 12 bits long and the HFN 20 bits) all the bytes of a PDU are ciphered except its first two bytes, which again contain the SN of the PDU and an extension bit indicating whether the next (i.e. the third) byte is a length indicator followed by an extension bit, or is a data byte of an SDU and some other bits having functions not closely related to the present invention.

It is well known in the art that length indicators can be used to detect the abovementioned problem of HFN un-synchronization between the sender and the receiver. Indeed, such findings are discussed both in a 3GPP RAN WG2 #37 document entitled "Erroneous LI and RLC Reset Procedure" (R2-031831) (hereinafter referred to as R2-031831), included herein by reference, and in U.S. Patent Application 2003/0091048 "Detection of Ciphering Parameter Unsychronization in a RLC Entity" (hereinafter referred to as 91048), also included herein by reference. Additionally, as disclosed by 91048, a padding field with a predefined pattern can also be used to detect HFN un-synchronization. The illegal states signifying HFN un-synchronization that can occur in length indicators embedded in PDUs include:
● Where the value of a length indicator embedded in the PDU is greater than the length of the data part that can be accommodated in the PDU.
● Where there are multiple length indicators that are not in ascending order.
● Where there is a length indicator having a reserved value which is disallowed by the relevant protocol.
● Where the length indicator embedded in a PDU has a predefined value and is not in a predefined location.

However, the use of such means described in the above documents in the detection of HFN un-synchronization is not without drawbacks. Referring to R2-031831, when an erroneous length indicator is detected, it is assumed that the erroneous length indication is due to a HFN un-synchronization and an RLC Reset procedure is triggered to restore HFN synchronization. Note that this technique only works for AM transmission. For UM transmission, the method disclosed by R2-031831 is not applicable because no RLC reset procedure for UM is disclosed either in R2-031831 or in 3GPP TS 25.332. Referring to 91048, when HFN un-synchronization is detected, the receiver invokes a process to synchronize the communication link. This can be done with an explicit parameter signaling procedure. Examples of explicit signaling procedures for both AM and UM transmission are: the RLC re-establishment procedure and the security parameter synchronization procedure. For AM transmission, the RLC reset procedure is another example of an explicit parameter signaling procedure.

Explicit parameter signaling procedures involve explicit signaling between the sender and the receiver, adding a further transmission overhead and is therefore time consuming. The HFN re-synchronization procedure is time consuming due to transmission delay, potential signal loss during radio transmission and utilization of the time-out retransmission mechanism. There is a need then, for a method to keep HFN re-synchronization between stations that avoids the need for time consuming procedures and/or system resets and subsequent data loss.

Although the present invention is described in the context of a 3GPP system, it is expressly noted that the present invention can be applied to any communications system that has suitably similar architecture.

In a protocol data unit (PDU), there is no special field dedicated to detecting hyper frame number (HFN) un-synchronization, and although the length indicator field and the padding field can be used for this purpose as discussed above, they are not dedicated to the task and are unsuitable in many instances. Consequently, reliable detection of HFN un-synchronization using these features cannot be fully guaranteed as, for example, a technique dependent upon length indicators cannot be applied to PDUs that do not contain length indicators. Also, deciphering PDUs with an HFN adjusted according to a length indicator dependent technique, and finding no further HFN un-synchronization symptom(s), does not fully guarantee that the adjusted HFN is the true synchronous value for HFN. Moreover, if bit corruption of a PDU without detection by a lower layer cyclic redundancy check (CRC) mechanism is considered, the detection of an HFN un-synchronization symptom does not fully guarantee that the HFN is un-synchronized. (Since the probability of bit corruption in a PDU escaping detection by a lower layer CRC mechanism is quite low, the likelihood of bit corruption in two PDUs going undetected in a single scenario is so low, that it is not considered in the embodiments of this invention.) It is for the above reasons that the present invention method utilizes the previously described techniques for detection of HFN un-synchronization, layered in such a way and with such safeguards as to overcome the problems that can be experienced by systems complying with the referenced specifications.

As described above, there are two possibilities that will cause loss of HFN synchronization, i.e. (1) the receiver missing more than 'SN space number' of consecutive PDUs and (2) some bits of the SN field embedded in a PDU being corrupted during radio transmission.

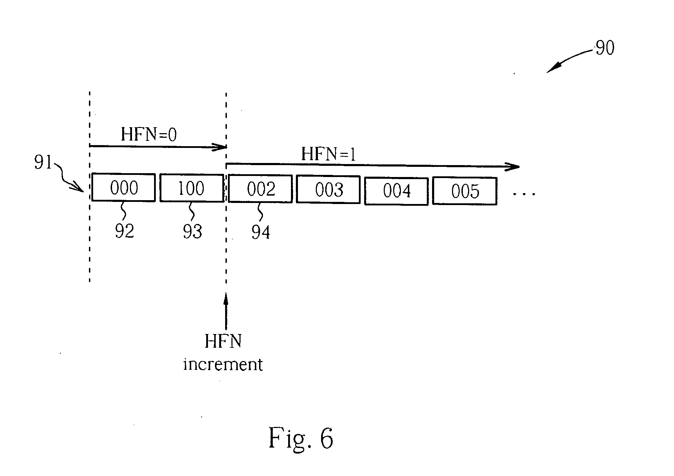

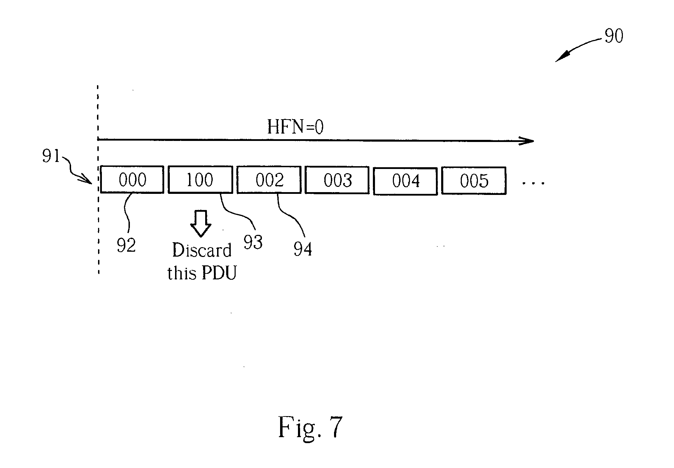

Consider the second of two possibilities that will cause loss of HFN synchronization (as described above), i.e. bit corruption of a PDU without detection by a lower CRC mechanism. In case the bit corruption occurs at the SN field of the PDU, the corrupted SN will jump to an unexpected, out of sequence value, while the SN of the next PDU will resume the normal sequence. Please refer to Fig.6 in conjunction with the following example. Fig.6 represents PDUs being received by a receiving station 90 and deciphered in sequence from left to right. For UM transmissions (where no retransmission is allowed) a normal sequence of PDUs 91 may have SN values of 000, 001, 002, 003, 004, 005 etc. If, however, the second PDU 93 is corrupted so that its SN value becomes 100, i.e. the receiving station will receive a sequence of PDUs with SNs as follows: 000, 100, 002, 003, 004, 005 etc. According to the prior art, the receiving station will decide that the HFN for the third PDU 94 in the string (SN = 002) should be incremented by one because the SN value 002 is less than that of the previously received PDU 93 (SN=100) and must therefore belong to the next batch of 128 PDUs. Furthermore, because of UM protocol stipulations, the PDU 94 is not retransmitted using the pre-adjustment HFN value, and so the temporary upset caused by the corrupted PDU goes undetected, and HFN difference between the transmitting station and the receiving station remains at one for subsequently received PDUs. However, note that the possibility of such SN corruption occurring in two consecutive PDUs without detection by a CRC mechanism is very low, furthermore the possibility of two corrupted consecutive PDUs having corrupted SNs with consecutive values again is significantly lower (1/128 lower for UMD PDUs having 7 bit SNs). Therefore, according to the present invention, if a PDU is received with a SN value, which is not one after the SN value of its previously received PDU and is not one before the SN value of its next received PDU either, then the PDU is discarded as if it were never received, i. e. the PDU is ignored. In the above example the second PDU 93 (SN= 100) would be discarded (as shown by Fig.7), after which the next sequential PDU 94 (SN=002), i.e. the third PDU, would be considered to belong to the same HFN cycle as the first PDU 92 (SN=000) . Hence, in this way, HFN synchronization is retained.

Consider now the first of the two possibilities that will cause loss of HFN synchronization (as described above). In the case of the receiver missing more than SN space number of consecutive PDUs, HFN difference between the sender and the receiver will be one. Therefore, incrementing HFN by one at the receiver will restore HFN synchronization because, unless more than double the SN space number of contiguous PDUs (>256 PDUs in UM, where SN space number = 128,) are missing, HFN un-synchronization only means a difference of one between the sender and the receiver. As for missing/losing more than 256 consecutive PDUs, if after incrementing the current HFN value by one the receiver still detects HFN un-synchronization, the HFN value can be further incremented by one at the receiving station. Since missing larger and larger number of consecutive PDUs has a lower and lower probability, the maximum on-line adjustment of HFN can be limited to a predefined number. When HFN un-synchronization is still detected after the limiting predefined number of HFN adjustments has been reached, the on-line HFN adjustment procedure is terminated and considered as failed and an explicit parameter signaling procedure is invoked.

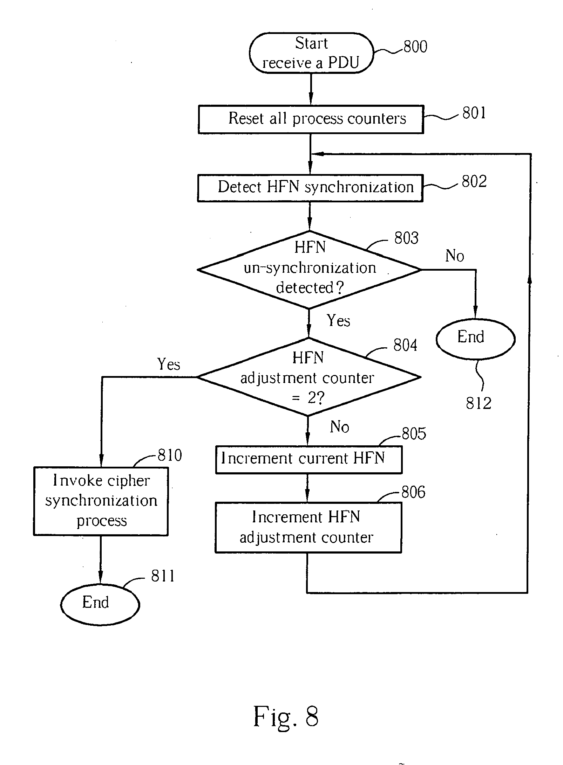

The above embodiment can be summarized in the following steps, which in turn refer to the flow diagram of Fig.8:
- Step 800:: Process starts. A PDU is received.
- Step 801:: All process counters (see below) are reset to zero.
- Step 802:: Detection of HFN un-synchronization symptoms from the received PDU commenced.
- Step 803:: A decision is made regarding whether analysis results identify HFN un-synchronization symptoms. If no un-synchronization symptoms have been detected then the process ends at step 812, otherwise the process progresses to step 804.
- Step 804:: The HFN adjustment counter is interrogated; if the counter is less than 2 then the process progresses to step 805, otherwise the process progresses to step 810.
- Step 805:: The current HFN value is incremented by one.
- Step 806:: The HFN adjustment counter is incremented by one to record the increase in HFN value and the process loops back to the beginning of step 802.
- Step 810:: If (from step 804) the HFN value has been incremented twice, then HFN adjustment is abandoned and a cipher synchronization process is invoked.
- Step 811:: Process ends.
- Step 812:: Process ends.

The maximum allowed value of the HFN adjustment counter above is used in view of a preferred embodiment value. However, this limit can have any practical numerical value. Moreover, the steps of the process can be performed in other arrangements, and even with other steps intervening. On the other hand, Step 804 above can be neglected and the process progresses from step 803 to step 805 directly. In addition, since it takes time for a transmitter to transmit SN space number of PDUs, which are lost during radio transmission, the receiver can prohibit HFN adjustment step (step 805) for a predetermined period of time after a PDU is received and deciphered successfully. The predetermined period of time is no shorter than the time period required for the transmitter to transmit SN space number of PDUs.

In the above embodiment, when the HFN adjustment procedure is terminated and considered as failed, the PDU on which the HFN adjustment procedure was working is discarded in one preferred embodiment. The original, i.e., pre-adjustment, HFN value is assigned to the next PDU unless an SN rollover occurs between the SN of the discarded PDU and an SN of a next consecutive PDU, in which case the original HFN value is incremented by one. That is, if for example the predefined number of HFN adjustments is set at two (step 804 in Fig. 8), then at the point where the procedure is terminated and considered as failed the original HFN value will have been incremented by one, twice over, hence the current HFN at procedure termination will correspond to 'original HFN+2'. The HFN value assigned to the next PDU will correspond to 'current HFN-2', therefore 'original HFN value' can be taken to mean HFN value prior to any adjustment in a particular iteration of the present invention process, and not merely prior to the last adjustment.

Note that it is possible for each bit of the PDU to be corrupted without said corruption being detected by a lower layer's CRC mechanism. If bit corruption occurs in the parts of a PDU used for detecting HFN un-synchronization symptoms, e.g., in the length indicator(s) or in a padding field, an erroneous un-synchronization symptom may be detected. However, because HFN un-synchronization caused by PDU corruption and HFN un-synchronization caused by the receiver missing more than SN space number of consecutive PDUs will both create the same apparent affect and initiate HFN adjustment, an additional measures are used to circumvent HFN adjustment being applied to false alarm cases. The HFN adjustment process is limited to a predefined number of iterations (two, in the preferred embodiment of the present invention). That is, taking the present invention predetermined number as an example, if the HFN adjustment process is terminated (as described above) for a second time and therefore meaning that two consecutive PDUs have been discarded, then on-line recovery of HFN synchronization by the present invention method is considered to have failed and an explicit parameter signaling procedure is invoked.

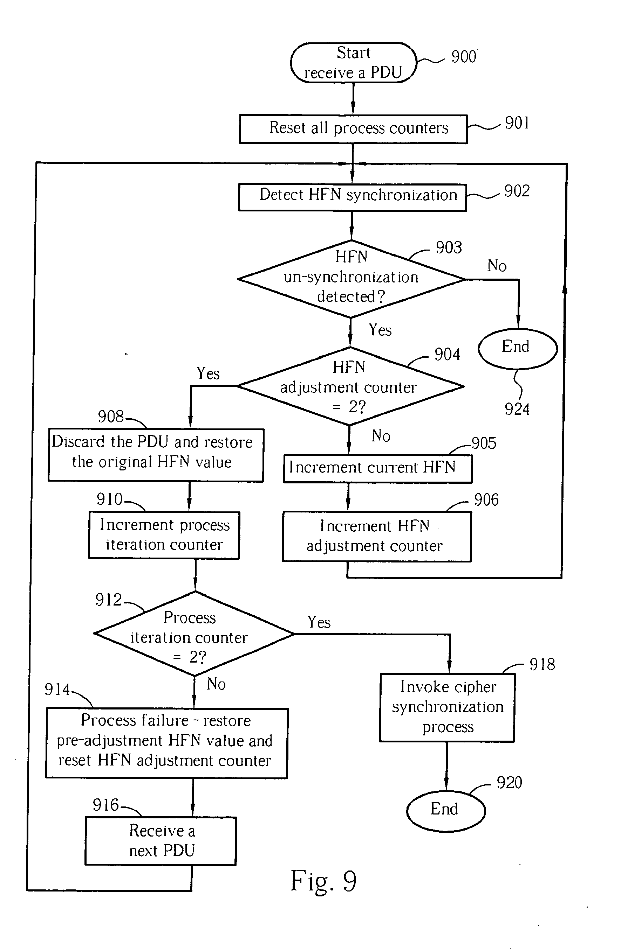

The above embodiment can be summarized in the following steps, which in turn refer to the flow diagram of Fig.9:
- Step 900:: Process starts. A PDU is received.
- Step 901:: All process counters (see below) are reset to zero.
- Step 902:: Detection of HFN un-synchronization symptoms commenced.
- Step 903:: A decision is made regarding whether analysis results identify HFN un-synchronization symptoms. If no un-synchronization symptoms have been detected then the process ends at step 924, otherwise the process progresses to step 904.
- Step 904:: The HFN adjustment counter is interrogated; if the counter is less than 2 then the process progresses to step 905, otherwise the process progresses to step 908.
- Step 905:: The current HFN value is incremented by one.
- Step 906:: The HFN adjustment counter is incremented by one to record the increase in HFN value and the process loops back to the beginning of step 902.
- Step 908:: If (from step 904) the HFN value has been incremented twice, the PDU is discarded and the original HFN value is restored.
- Step 910:: The process iteration counter is incremented to record an iteration of the HFN adjustment process.
- Step 912:: The process iteration counter is interrogated; if the counter is less than 2 then the process progresses to step 914, otherwise the process progresses to step 918.
- Step 914:: If (from step 912) the number of process iterations has not yet reached 2, then the current iteration of the HFN adjustment process is considered to have failed, hence the pre-adjustment value of HFN is restored (unless SN rollover has occurred, in which case pre-adjustment HFN+1 is used) and the HFN adjustment counter is reset to zero.
- Step 916:: The process waits until the receiver receives a next PDU and then loops back to the beginning of step 902.
- Step 918:: If (from step 912) the number of process iterations has reached 2, then HFN adjustment is abandoned, the current PDU is discarded and a cipher synchronization process is invoked.
- Step 920:: Process ends.
- Step 924:: Process ends.

The maximum allowed values of the counters above are used in view of a preferred embodiment values, however, these limits can have any practical numerical value. Moreover, the steps of the process can be performed in other arrangements, and even with other steps intervening.

Because HFN adjustment under the conditions described herein will generally be incremental, aside from times when original PDU values are restored following the failure of HFN adjustment to re-synchronize the current HFNs, a method for decrementing a current HFN value to re-gain HFN synchronization does not feature in the above embodiments of the present invention. However, in another embodiment, instead of a PDU being discarded following the finite number of unsuccessful HFN increments (i.e. incrementing the HFN fails to restore HFN synchronization) allowed by the preferred embodiment (assuming that limit is set), the original HFN value is decremented in order to restore HFN synchronization. In a similar way to the above preferred embodiment method for incrementing HFN, limits may be imposed on the allowable number of decrements and iterations before the process is considered as failed.

According to a further embodiment, length indicators are used in addition to or instead of SN irregularities to detect HFN un-synchronicity. By way of example, consider a situation wherein illegal length indicators (LIs) are detected in a first predetermined number out of a second predetermined number of sequentially received deciphered UMD PDUs containing LI fields, say, two out of any ten PDUs meeting the above criteria. Then, according to the embodiment of the present invention related here, the current HFN value is incremented by one and the last PDU of the ten PDUs containing LI fields found to have an illegal LI, together with all subsequent PDUs, is re-deciphered using the adjusted HFN value. The method can be iterated for as long as more than two out of every ten PDUs containing LI fields have illegal LIs. As with the embodiments detailed above, a limit may be imposed on the number of iterations of HFN adjustment for a given sample/batch of PDUs, after which the process is considered to have failed.

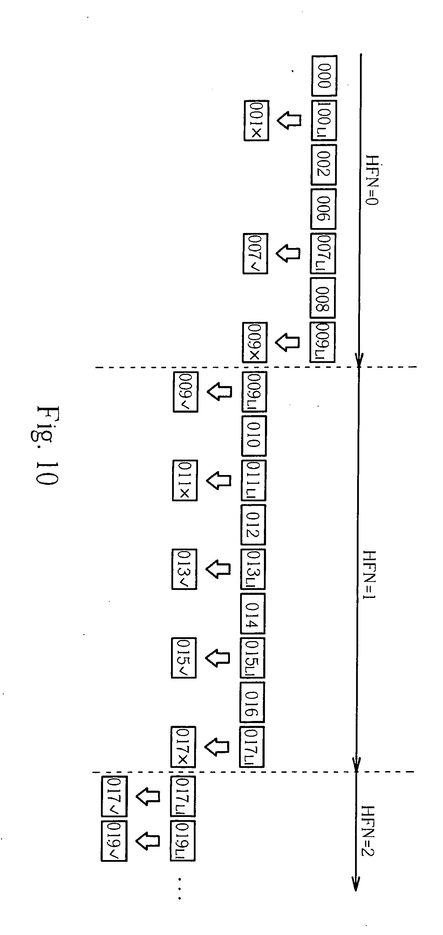

To illustrate the above example, assume the Receiver receives a sequence of UMD PDUs with SNs 000, 001, 002, 006, 007, 008, 009, 010, 011, 012, 013, 014, 015, 016, 017 & 019. In the interests of simplicity, suppose all PDUs with odd SNs contain LI fields, and all PDUs with even SNs do not contain LI fields; legal LIs will therefore only be detected in SNs 001, 007, 009, 011, 013, 015, 017 & 019 (Fig.10 refers). For the PDUs with SNs 001 and 009 (two out of the first three deciphered UMD PDUs containing LI fields), illegal LIs are detected with HFN = 0, hence in this example, the HFN value is incremented by one and the PDU with SN 009 is re-deciphered. The PDUs with SNs 011 and 017 are then found to contain illegal LIs with HFN = 1, again making two out of the next four UMD PDUs containing LI fields found to have illegal LI, hence the HFN value is incremented again by one so that HFN = 2 and the PDU with SN 017 is re-deciphered.

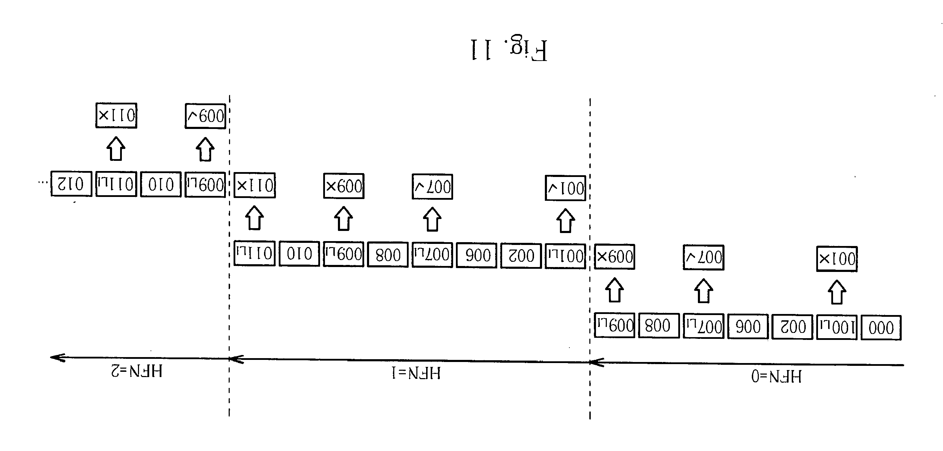

In practice, since the detection of illegal LI does not carry a 100% certainty of successful detection rate, choosing a small second predefined number of PDUs having illegal LI from which to trigger HFN adjustment as in the example above, may cause longer recovery times than can be realized if a larger second predefined number is selected. However, HFN synchronization recovery will nevertheless be accomplished after a few iterations. On the other hand, in choosing a larger first predefined number (say, 3) to make the above mechanism more robust, the trade-off is that the HFN synchronization recovery time will be extended. Note also that any HFN update according to the embodiment detailed above, is applied at the beginning of the last UMD PDU with illegal LI detected, i.e. the last PDU with illegal LI of any group of PDUs with illegal LI is re-deciphered. This is done to reduce memory requirements, however, in an embodiment where reduction of memory requirements is not a primary consideration, the updated HFN can be applied from the first UMD PDU in which illegal LI was detected, as shown by Fig.11.
One further symptom of HFN un-synchronization is an unmatched predefined padding pattern. As discussed in the description of the prior art above, padding occupies any remaining space at the end of a PDU in order to ensure that the PDU is made up to the predetermined length required in a given communications system. Also, padding has its own LI at the head of the PDU where no STATUS PDU is inserted, hence a mismatch between the amount of padding according to the padding LI and the amount of padding at the end of the PDU. Hence, padding patterns can also be used to detect HFN un-synchronization.

Any number or combination of the HFN un-synchronization symptoms stated above may be used within the present invention method to detect HFN un-synchronization.

It is an advantage then, of the present invention, that the receiving station can recover HFN synchronization on line, i.e. without interruption to the dynamic transmission process. Data loss caused by the deciphering of PDUs using un-synchronous parameters will be kept a minimum. Explicit parameter signaling procedures, such as RLC Reset procedures, are not needed except as a last resort, so time delay and potential signaling loss can be avoided.

## Claims

1. A method for ensuring hyper frame number, called HFN hereafter, synchronization in a receiving station (90) of a wireless communications system, the method comprising:
adopting an initial HFN at a commencement of a
ciphering session; and
detecting an irregularity in sequence number values; **characterised by** the step of:
discarding a received protocol data unit (93) if the received protocol data unit (93) has an sequence number that is out of sequence according to a preceding PDU (92) and a following PDU (94).

2. A method for restoring hyper frame number, called HFN hereafter, synchronization in a receiving station (90) of a wireless communications system, the method comprising the following steps:
(a) adopting an initial HFN that is shared with a transmitting station at a commencement of a ciphering session; and
(b) detecting HFN un-synchronization at a receiving station (90) during the ciphering session (802, 902);
**characterised by** the steps of:
(c) adjusting a current HFN of the receiving station (90) to derive an adjusted HFN (805, 905) ; and
(d) adopting the adjusted HFN at the receiving station (90) for subsequent operations of the ciphering session.

3. The method of claim 2, **characterised in that** in step (b) detecting HFN un-synchronization comprises detecting a symptom of an illegal state of a length indicator, called LI hereafter, of a protocol data unit, called PDU hereafter.

4. The method of claim 2, **characterised in that** when in step (b) detecting HFN un-synchronization comprises detecting a symptom of an illegal state of an LI in a first predetermined number out of a second predetermined number of sequentially received deciphered PDUs containing LI fields.

5. The method of claim 2, **characterised in that** in step (b) detecting HFN un-synchronization comprises detecting a symptom of an unmatched predefined padding pattern of a PDU.

6. The method of claim 2, **characterised in that** adjusting a current HFN in step (c) comprises incrementing the current HFN value by one to derive the adjusted HFN (805, 905).

7. The method of claim 2, **characterised in that** adjusting a current HFN in step (c) comprises decrementing the current HFN value by one to derive the adjusted HFN.

8. The method of claim 2, further comprising the following step:
(f) prohibiting HFN adjustment for a predetermined period of time commencing after a PDU is received.

9. The method of claim 8, **characterised in that** the PDU of step (f) contains a length indicator and no HFN un-synchronization is detected when the PDU is deciphered using the current HFN.

10. The method of claim 8, **characterised in that** the predetermined period of time of step (f) is no shorter than a time required to transmit SN space number of PDUs .

11. The method of claim 2, further **characterised by** the following steps:
(g) repeating step (b) for establishing whether HFN synchronization has been restored as a result of step (c); and
(h) repeating steps (c) and (d) if HFN synchronization has not been restored according to step (g).

12. The method of claim 11, **characterised in that** step (g) further comprises discontinuing further HFN adjustment and restoring a previous value of HFN if steps (b), (c) and (d) have been repeated a predetermined number of times (804, 810).

13. The method of claim 12, **characterised in that** the predetermined number of times is 2 (804).

14. The method of claim 12, further **characterised by** discarding a current PDU and deciphering a sequentially next PDU according to the restored previous HFN value (908).

15. The method of claim 12, **characterised in that** the previous HFN value is a pre-adjustment HFN value.

16. The method of claim 15, **characterised in that** the pre-adjustment HFN value is incremented by one if a SN rollover occurs between the SN of a current PDU and an SN of a next consecutive PDU.

17. The method of claim 11, further **characterised by** discontinuing further iterations of an HFN adjustment process and invoking a cipher synchronization process if steps (b), (c), (d), (g) and (h) have been repeated a predetermined number of times (912, 918).

18. The method of claim 17, **characterised in that** the predetermined number of times is 2 (912).
